Europäisches Patentamt

European Patent Office

Office européen des brevets

⑱

(11) Publication number: **0 119 193**
**B1**

# EUROPEAN PATENT SPECIFICATION

(12)

(45) Date of publication of patent specification: **25.05.88**

(21) Application number: **82903101.2**

(22) Date of filing: **15.09.82**

(86) International application number:
**PCT/US82/01248**

(87) International publication number:
**WO 84/01128 29.03.84 Gazette 84/09**

(51) Int. Cl.⁴: **B 32 B 31/18**

(54) **STIFFENED COMPOSITE INTEGRAL WEB.**

(43) Date of publication of application:
**26.09.84 Bulletin 84/39**

(45) Publication of the grant of the patent:
**25.05.88 Bulletin 88/21**

(84) Designated Contracting States:
**DE FR GB NL SE**

(56) References cited:
FR-A-1 271 198
US-A-3 831 333
US-A-3 995 080
US-A-4 047 354
US-A-4 113 910
US-A-4 129 974
US-A-4 169 749
US-A-4 198 018
US-A-4 219 980
US-A-4 223 053

(73) Proprietor: **THE BOEING COMPANY**
**P.O. Box 3707 Mail Stop 7E-25**
**Seattle Washington 98124-2207 (US)**

(72) Inventor: **HAMM, Robert, Alton**
**5416-134th Avenue Southeast**
**Bellevue, WA 98006 (US)**

(74) Representative: **Hoijtink, Reinoud et al**
**OCTROOIBUREAU ARNOLD & SIEDSMA**
**Sweelinckplein 1**
**NL-2517 GK Den Haag (NL)**

## Description

### Background of the Invention

This invention relates to stiffening a composite material web structure with transverse stiffening tubes. Such a structure is known from US—A—4 223 053. In the conventional, aluminium-metal design approach, a standard angle stiffener is utilized which is riveted against the web. However, fastening methods utilizing rivets cannot be used in graphite epoxy parts because the expansion of the head may crack the resin. Furthermore, fasteners should be electrochemically compatible to prevent corrosion. The solution of utilizing screw type fasteners becomes highly uneconomical and utilizing so-called stiffeners becomes complicated in design, tooling and manufactuure. By the teachings of this invention, transverse web stiffeners are utilized in the form of tubular elements having flattened ends which are inserted between the composite laminations of the web material.

The following references were found to be of interest:

> U.S. Patents 3,831,333
> 3,995,080
> 4,047,354
> 4,113,910
> 4,129,974
> 4,198,018
> 4,219,980
> 4,219,980
> Italian Patent 682,106 and
> British Patent 640,341.

### Summary of the Invention

In general, stiffening of web construction or structures is often demanded in aircraft manufacture, such as rear spar assemblies, on horizontal and/or vertical stabilizers and in vertical wing or rib structures due to requirements for system attachments, access holes, etc.

The present invention proposes a web stiffening wherein a tube with flattened ends is inserted between graphite epoxy laminates or between two graphite epoxy sheets. The tube, which may be of any metal or composite material, is cured into place by the curing of the web about the inserted tube. As a result, the tube and cured webs become an integral part of the stiffener.

### Brief Description of the Drawings

FIGURE 1 illustrates a typical conventional aircraft web structure.

FIGURE 2 is a cross section taken along line 2—2 of FIGURE 1.

FIGURE 3 illustrates a graphite epoxy web structure stiffened by the present inventive method.

FIGURE 4 is a section taken along line 4—4 of FIGURE 3.

FIGURE 5 is a cross section taken along line 5—5 of FIGURE 3.

FIGURE 6 is a cross section taken along line 6—6 of FIGURE 3.

FIGURE 7 is a thin wall tube in forward view.

FIGURE 8 is a thin wall tube in side view.

FIGURES 9A—9E are cross sections of various possible tube configurations.

### Detailed Description of the Invention

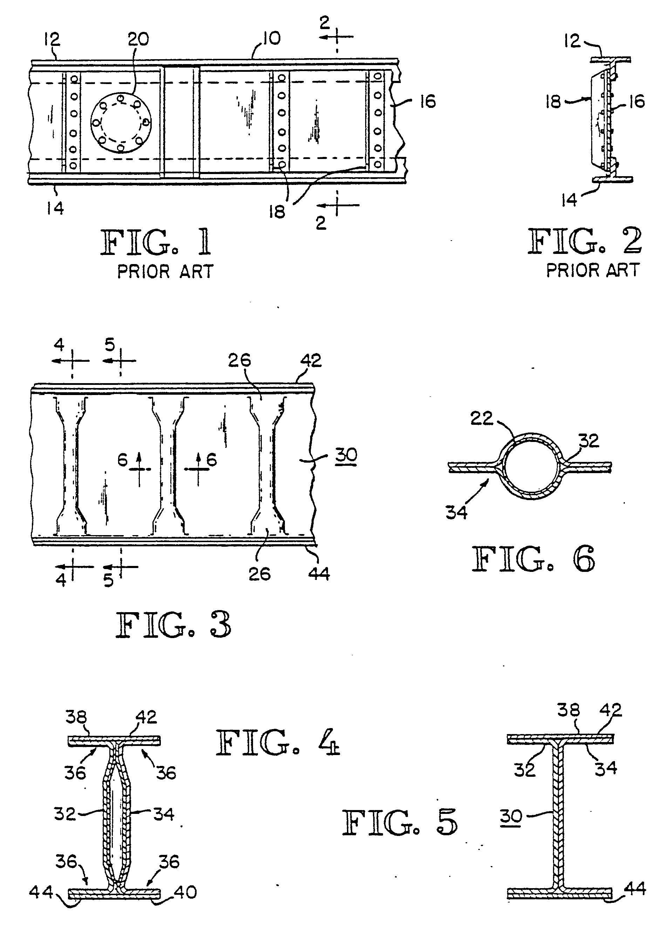

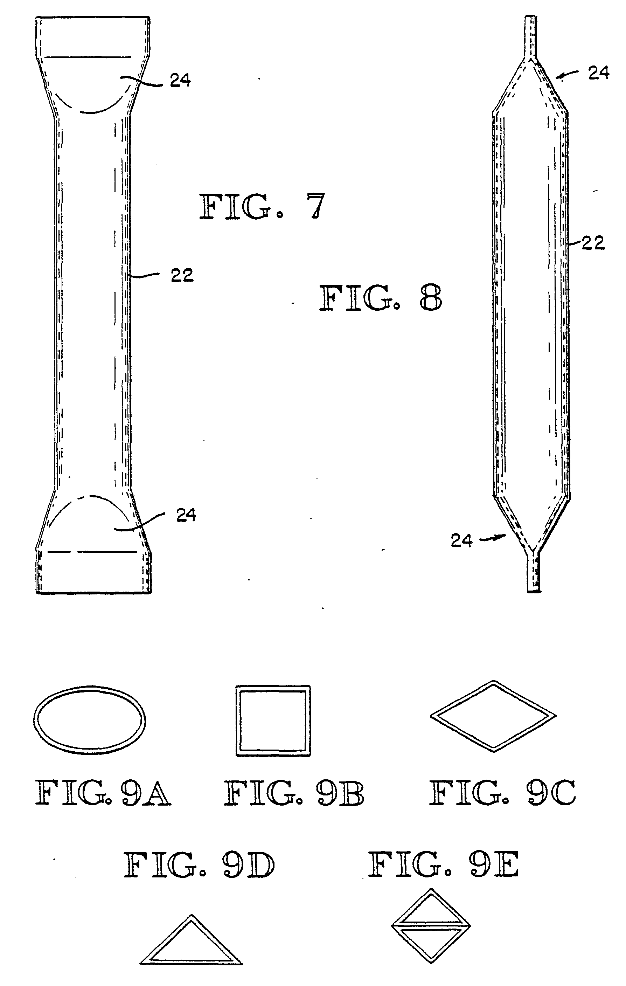

In the conventional aluminum aircraft structure 10, illustrated in FIGURES 1 and 2, there are spars or ribs 12 and 14 interconnected by a web 16 which together form a typical structural assembly. In the event the web portion has to be strengthened, stiffeners 18 or doublers 20 are riveted against the web and are normally attached to the spars 12 and 14 as well. Now, as mentioned herein, when utilizing composite materials, it becomes difficult to attach stiffeners by the conventional method and also uneconomical and inefficient. Accordingly, the present invention utilizes a tube stiffener 22 which, in the preferred embodiment, is made of thin wall tubing of corrosion resisting steel or titanium or other suitable material. The tube stiffener 22 is cut long enough to carry a load from spar to spar. Referring to FIGURES 7 and 8, the tube or stiffener 22 has been flattened at both ends 24 so as to accomplish easy insertion between laminations or webs and to accomplish a strong junction or interconnection at the upper and lower spar assembly 26. The complete assembly of a stiffened composite web structure 30 is illustrated in FIGURES 3—6 and cross sections 4—4, 5—5 and 6—6. In this preferred embodiment, a double or laminated web 32 and 34 are utilized which are flanged at their general end portions 36 so as to form an integral "T" spar 38 and 40 together with the cap strips 42 and 44, respectively. Of course, any variation of assembly can be utilized, i.e. instead of making the integral "T" spars 42 and 44, separate "T" or "L" sections may be bonded or fused to the webs 32 and 34. Furthermore, tube type stiffeners form a highly efficient structure due to:

1) symmetry,
2) double shear tube to web attachment and
3) closed section tube ends,

which avoids free angle edge and provides low crippling value as compared to conventional angle stiffeners 18 and which may be replaced with other types of stiffener tube configurations providing other advantages of strength or constructural interconnections. For example, several cross sectional tube arrangements may be utilized as illustrated in FIGURES 9A—9E.

### Claim

Graphite epoxy web structure comprising stiffening tubes (22) characterized by a web structure (30) consisting of two adjacent web sheets (32, 34) or one laminated sheet; said tube (22) having at least one flattened end (24), said flattened end (24) being inserted between the web sheets (32, 34) or between two of the laminations of the sheet; and whereby the two adjacent web sheets (32, 34) or the laminations of the sheet are cured substantially equally about the inserted tube (22).

## Patentanspruch

Graphit-Epoxy-Stegstruktur, umfassend Versteifungsrohre (22), gekennzeichnet durch eine Stegstruktur (30), die aus zwei benachbarten Stegplatten bzw. -folien (32, 34) oder einer laminierten Platte bzw. Folie besteht; wobei das Rohr (22) wenigstens ein abgeflachtes Ende (24) hat, wobei das abgeflachte Ende (24) zwischen die Stegplatten bzw. -folien (32, 34) oder zwischen zwei der Laminierungen der Platte bzw. Folie eingefügt ist; und wodurch die beiden benachbarten Stegplatten bzw. -folien (32, 34) oder die Laminierungen der Platte bzw. Folie im wesentlichen in gleichem Maße um das eingefügte Rohr (22) ausgehärtet sind.

## Revendication

Structure d'âme en graphite-époxy, comprenant des tubes de raidissement (22), caractérisée par une structure d'âme (30) constituée de deux feuilles d'âme adjacentes (32, 34) ou d'une feuille stratifiée; ledit tube (22) ayant au moins une extrémité aplatie (24), ladite extrémité aplatie (24) étant insérée entre les feuilles d'âme (32, 34) ou entre deux des strates de la feuille, les deux feuilles d'âme adjacentes (32, 34), ou les strates de la feuille étant durcies sensiblement également autour du tube inséré (22).

0 119 193

FIG. 1
PRIOR ART

FIG. 2
PRIOR ART

FIG. 3

FIG. 6

FIG. 4

FIG. 5

1

FIG. 7

FIG. 8

FIG. 9A   FIG. 9B   FIG. 9C

FIG. 9D   FIG. 9E

2